# EUROPEAN PATENT SPECIFICATION

(11) **EP 3 050 314 B1**
(45) Date of publication and mention of the grant of the patent: **28.02.2018**
(21) Application number: 14783773.6
(22) Date of filing: 23.09.2014
(51) Int. Cl.: H04Q 9/00, H04L 12/46

(54) **SYSTEM FOR CONNECTING SMART DEVICES IN A BUILDING**
SYSTEM ZUR VERBINDUNG VON INTELLIGENTEN VORRICHTUNGEN IN EINEM GEBÄUDE
SYSTÈME DE CONNEXION DE DISPOSITIFS INTELLIGENTS DANS UN BÂTIMENT

(30) Priority: 23.09.2013 GB 201316845
(43) Date of publication of application: 03.08.2016
(73) Proprietor: SIEMENS PLC, Camberley GU16 8QD (GB); Green Energy Options Ltd., Cambridge CB23 7QS (GB)
(72) Inventor: HEATHCOTE, Jeffrey, Sherwood, Nottingham NG5 3FQ (GB); MATTHEWS, Greg, Lower Cambourne Cambridge CB23 6ES (GB)
(74) Representative: Maier, Daniel Oliver
(86) International application number: PCT/EP2014/070281
(87) International publication number: WO 2015/040244

(56) References cited:
- EP-A2- 1 499 072
- WO-A2-2007/143554
- US-A1- 2013 154 850
- US-A1- 2013 212 676
- US-A1- 2014 176 340
- US-B1- 8 570 999
- Siemens: "Overcoming the High-Rise Challenge", , June 2013 (2013-06), XP002733257, Retrieved from the Internet: URL:http://www.ppc-ag.de/files/solving_the _high_rise_challenge_mdu_leaflet.pdf [retrieved on 2014-12-02]

## Description

The present invention relates to a system for connecting smart devices in a building. More specifically, the present invention relates to the provision of connections between smart metering devices arranged within a multiple dwelling unit.

The United Kingdom (UK) have mandated the rollout of smart gas and electricity meters and in-home displays (IHD) to all households. These devices are to be linked together at a home using ZigBee™ (in the following referred to as ZigBee) radio (operating at 2.4GHz), utilizing the Smart Energy Profile 1.x through a device called a communications hub (CH). The Medium Access (MAC) and Physical Radio (PHY) layers of ZigBee are defined in the IEEE 802.15.4 standard.

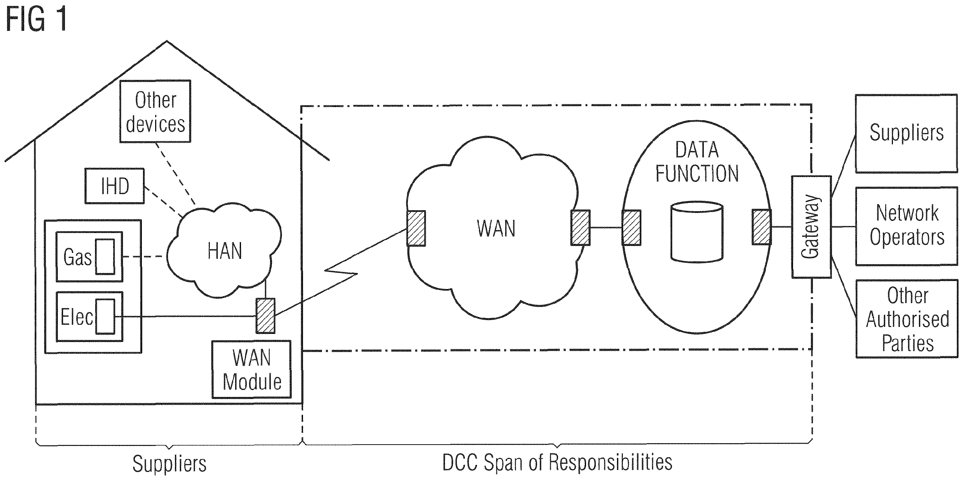

An example of the envisaged typical configuration is given in FIG 1, taken from "Smart Metering Implementation Programme: Prospectus", 27 July 2010, published by ofgem, ofgem E-Serve and the Department of Energy & Climate Change (http://www.ofgem.gov.uk/e-serve/sm/Documentation/Documents1/Smart%20metering%20-%20Prospectus.pdf).

Ofgem's proposal is based on smart metering components such as the above mentioned gas and electricity meters, in-home displays as well as other smart devices, for example provided by energy suppliers (energy providers, utility) to the individual household. The energy provider or utility will most likely also provide a communication hub to which the smart devices are either directly connected using wires or through a wireless home area network (HAN) using the ZigBee communication standard. The communication hub, referred to as WAN Module in FIG 1, also provides access to a wide area network (WAN) to which the energy providers as well as other authorised parties have access. The wide area network is planned to be managed by a central data and communications entity (DCC).

This approach should be suitable for the majority of households where gas and electricity meters as well as in-home displays are all within a limited distance or radio range of the communication hub. The UK Smart Metering Programme assumed that individual networks can be installed separately by energy retailers each time a smart meter is installed in a building (in line with assumptions for "normal" houses).

However, this approach will not be suitable for Multiple Dwelling Units (MDUs) where a larger number of dwellings reside within the same building, and where physical distance between smart devices, building material, interferences or physical space render individual setting up of home area networks required for every dwelling difficult.

A proposal addressing the issue of providing a system that enables the implementation of smart metering in multiple dwelling units is disclosed in patent application no. GB 1411267.6. The present invention is based on the disclosure of this patent application and specifically develops the operation of the ZigBee bridge ZBR with the business control centre BCC further.

According to US 2013/154850 A1 a system is described for extending a Smart Meter' s range to connect to Home Area Networks for energy monitoring and demand response in a variety of locations. The system has a data concentrator with a wireless communicating module configured to transmit and receive information at one or more frequencies. The data concentrator receives power information from one or more smart meters and converts the wireless signal to a power-line carrier signal. The system also includes a wireless and power-line carrier bridge that converts the power-line carrier signal back to a wireless signal to connect to e.g. a smart device.

An approach to a multi device communication strategy is described in WO 2007/143554. In it several wireless bridge devices are used to bridge the communication between individual communication channels. The bridges are each communicatively coupled with one or more network devices, such as smart meters. The bridge devices are configured to facilitate communications by receiving communications from the communication channel or wireless network and providing those communications to the target network device on the local communication channel or on a remote communication channel via the wireless network. During initial communication a bridge device can determine if a network device is present in its address table. If this is not the case, then a MAC address for the network device is added to the table. If it is the case, a silence timer for the network device that tracks the presence of the device on a local segment of the bridge is reset. In a subsequent step, the bridge determines whether the received communication is destined for a remote device. If this is not the case, the bridge drops the communication as it will be received by the target device unless it is necessary to copy the message elsewhere to prevent remote silence timers from expiring.

The communication strategy in WO 2007/143554 requires several steps in order to identify the correct communication sources, content and targets. This, however, renders the communication method complicated and overly time consuming. Therefore, a need exists for a system in which smart devices are connected more efficiently.

According to the present invention, a system for connecting smart devices in a building is provided, wherein the system comprises at least two bridging devices, each arranged in relative proximity of at least one of at least two smart devices arranged at different locations within the building, wherein the at least two bridging devices are connected to the smart devices via a wireless connection and to each other via a broadband network, and wherein the bridging devices each use a list of addresses of supported smart devices and associated personal area networks to determine that a packet received from a source smart device is to be transmitted over the broadband network if the source smart device is supported by the bridqinq device, and to be discarded, if the source smart device is not supported by the bridqinq device.

Preferably, a list of addresses of smart devices and associated personal area networks is created and maintained by a building control centre of the system.

Preferably, a separate list is created and maintained for every bridging device.

Preferably, the list comprises addresses of source and/or destination smart devices.

Preferably, the broadband network is a power line communication network, a fibre optic network, an Ethernet or a Wireless Local Area Network.

Preferably, the broadband network supports Internet Protocol based communication.

Preferably, the wireless connections between the at least two bridging devices and the at least two smart devices are realised using protocols defined in the IEEE 802.15.4 communication standard.

Preferably, the at least two smart devices are smart meters, especially electricity and/or gas meters, and/or in-house displays and/or consumer access devices and/or prepayment meter interface devices.

Preferably, when the received packet is determined to be transmitted over the broadband network, the bridging device having received the packet generates a MAC level acknowledgement to the smart device from which the packet has been received.

Preferably, the packet to be transmitted over the broadband network is wrapped by the bridging device with the address of the building control centre as destination address.

Preferably, the building control centre, on receipt of the packet, removes the address header, reads the header of the original packet to determine the address of the destination smart device, and determines if the address of the destination smart device is comprised in a list of any of the bridging devices.

Preferably, the building control centre, if the address of the destination smart device is found, determines the address of the bridging device associated with the destination smart device, wraps the original packet with the address header of the bridging device and transmits the wrapped packet over the broadband network to the addressed bridging device.

Preferably, the addressed bridging device, on receipt of the packet, removes the address header and transmits the original packet to the destination smart device.

Preferably, on receipt of the packet, the destination smart device generates a MAC level acknowledgement to the bridging device.

An example of the system and processes according to the present invention will now be described with reference to the accompanying drawings in which:
FIG 1 illustrates the typical smart metering configuration as mandated by ofgem,
FIG 2 illustrates an exemplary embodiment of the system,
FIG 3 depicts the conceptual component model for the ZigBee bridge,
FIG 4 illustrates a flowchart comprising the wrapping and unwrapping of a ZigBee packets when sent from a source ZigBee device to a destination ZigBee device,
FIG 5 illustrates a flowchart of MAC level acknowledgement by the ZigBee bridge and handling of application level acknowledgements by the source ZigBee device, and
FIG 6 illustrates the exemplary format of a white list realised in a ZigBee bridge.

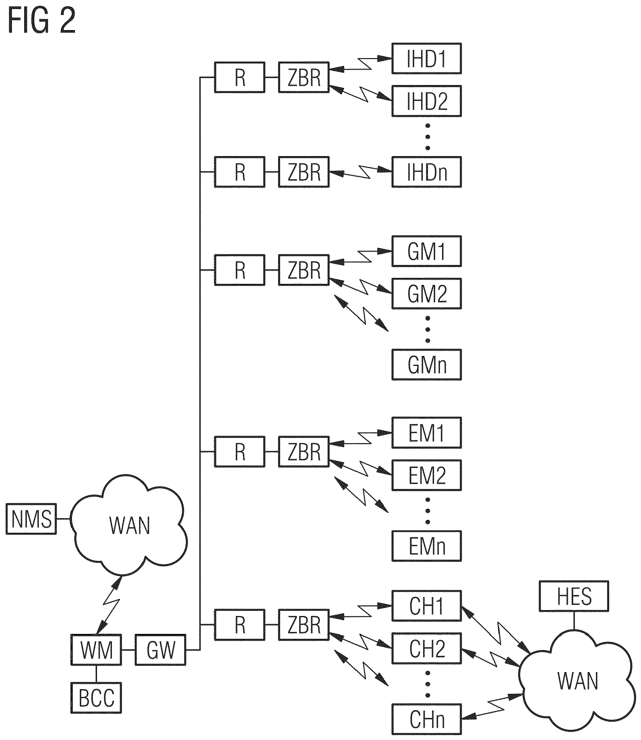

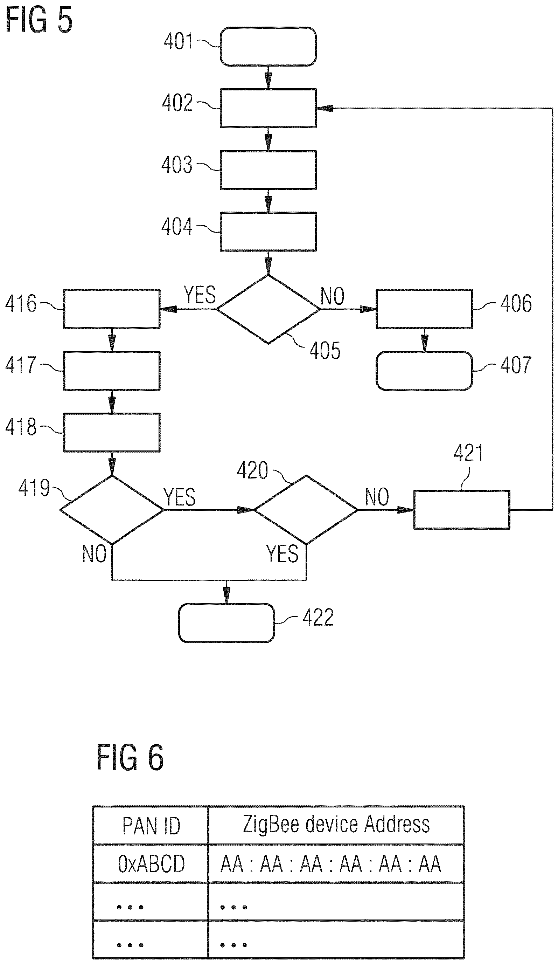

FIG 2 corresponds to FIG 5 of the above mentioned patent application no. GB 1411267.6. FIG 2 illustrates a possible configuration of the system for connecting smart devices in a typical multi dwelling unit MDU. In this example, connection to the wide area network WAN is realised through communication hubs CH1 to CHn, wherein a router device R connects to the communication hubs CH1 to CHn via a ZigBee bridge ZBR. The communication hubs CH1 to CHn in turn connect to the wide area network WAN wirelessly, using for example well known radio communication standards such as the above mentioned GPRS or UMTS. Furthermore, connection to the wide area network WAN is realised via a gateway device GW and a WAN modem WM. Connected to the WAN modem is also a building control centre BCC which, however, may also be realised as a centralised building control centre BCC connected to or integrated in the gateway device GW. Further details of the proposed system and individual components shown in FIG 2 can be found in GB 1411267.6.

A ZigBee bridge ZBR as disclosed in GB 1411267.6 acts as an interface between a broadband power line (BPL) router R and ZigBee devices IHD, GM, EM, CH, located within its RF range. Typical responsibilities of a ZigBee bridge device are the provision of an interface through which ZigBee messages can be transferred between a BPL router and multiple ZigBee devices, the provision of MAC level acknowledgements for sleepy and non-sleepy devices within its radio frequency (RF) range, the provision of a storage mechanism for sleepy device, to expose a set of configuration APIs for remote network management system, to allow local hardware configuration through a local device interface, for example via an USB (Universal Serial Bus) or Ethernet cable, and to provide and manage a white list, for example a list of approved ZigBee devices within its RF range.

According to the system as proposed in GB 1411267.6, the ZigBee bridge interfaces with a BPL router and the network management system NMS. The connection between ZBR and BPL router is realised for example via an Ethernet cable. The BPL router is thereby responsible for exchanging network data packets between power line and ZBR, but not for changing any features of the ZigBee bridge. The remote network management system in turn is for example responsible for configuring ZBRs present in the network as per installation requirements, viewing and clearing logs collected by ZBR, upgrading the firmware of the device and querying the device status if required.

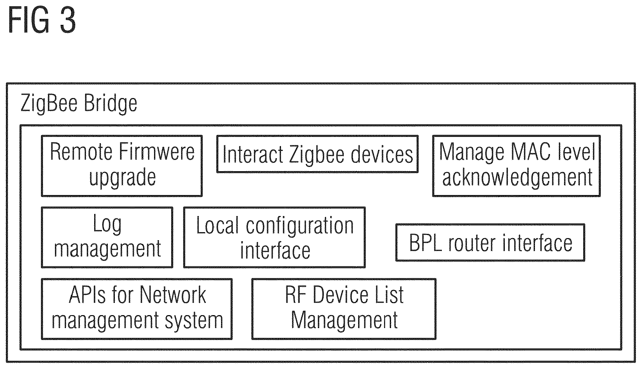

Individual sub components reflecting the main requirements of the ZigBee bridge are illustrated in FIG 3, corresponding to FIG 7 of GB 1411267.6.

Interact with ZigBee devices. All ZigBee devices are connected to the backbone network via ZigBee bridges. A ZigBee bridge is responsible for sending messages received from ZigBee devices over the IP based backbone network. Within the backbone network, ZigBee bridges do not join ZigBee networks and remain invisible to ZigBee devices.

Manage MAC level acknowledgement. In the situation where all ZigBee devices are in the same RF range, each device sends a MAC acknowledgement for every received data packet. If the sending device does not receive MAC acknowledgement it assumes that the receiving device has not received the packet, which causes the MAC layer in the sending device to repeat the sending of the same packet. In the MDU solution proposed in GB 1411267.6, the network range is increased by the use of an internet protocol (IP) based backbone network to which all ZigBee devices are connected via ZigBee bridges ZBR. Once a message is received at a ZigBee bridge ZBR via its RF interface, it generates a MAC acknowledgement for the same to avoid retransmissions in the ZigBee network caused for example by delays in providing such acknowledgement from the receiving device. The ZigBee bridge ZBR thus acts as if it was the receiving ZigBee device of the packet.

Remote Firmware Upgrade. Ideally, while installing the network as described above, every ZigBee bridge ZBR and BPL router it is connected to remain invisible to the user. Because it might be difficult for the field engineer to update the firmware on every Zigbee bridge ZBR following completion of the installation, a remote update of the firmware and thus features of ZigBee bridges is required. Such firmware update may be initiated and controlled from the NMS.

BPL router interface. As shown in FIG 2, a ZigBee bridge ZBR is connected to the backbone network via a BPL router R through the router's IP interface. This interface enables the ZigBee bridge ZBR to transmit packets received via the ZigBee RF interface over the backbone network, and the same interface also enables the ZigBee bridge to receive messages generated by other ZigBee devices which are connected to other ZigBee bridges.

Log Management. The ZigBee bridge ZBR maintains an activity, exception and event log for example for maintenance purpose.

APIs for network management system. All devices present in the MDU network may be managed via network management interface. Any interaction with the NMS is realised via a set of exposed APIs on each device.

Local device configuration. In case of for example a failure of ZigBee bridge ZBR and requirement for replacing it, this interface allows the field engineer to configure the new device before placing it to the network.

RF device list management. The ZigBee bridge maintains a list of devices it is connected to and which are in its RF range. This helps to avoid that a ZigBee device located in the RF range of two or more ZigBee bridges is addressed by all of these.

The MDU high rise solution as disclosed in GB 1411267.6 provides a communication infrastructure to be used by smart energy devices and by energy suppliers through external WAN interface. The solution provides an illusion to all the ZigBee Smart Energy (ZSE) devices and ZigBee home automation (ZHA) devices arranged in a building that the devices they need to communicate with are within its own RF range, whereas they are in fact out of RF range. The RF range is extended over an IP backbone, this includes but is not limited to the use of the existing power lines within the building. The interface to the IP back bone is through an IP interface device or gateway whereas the interface to the ZSE and/or ZHA devices from the IP interface device is realised via the ZigBee bridges ZBR.

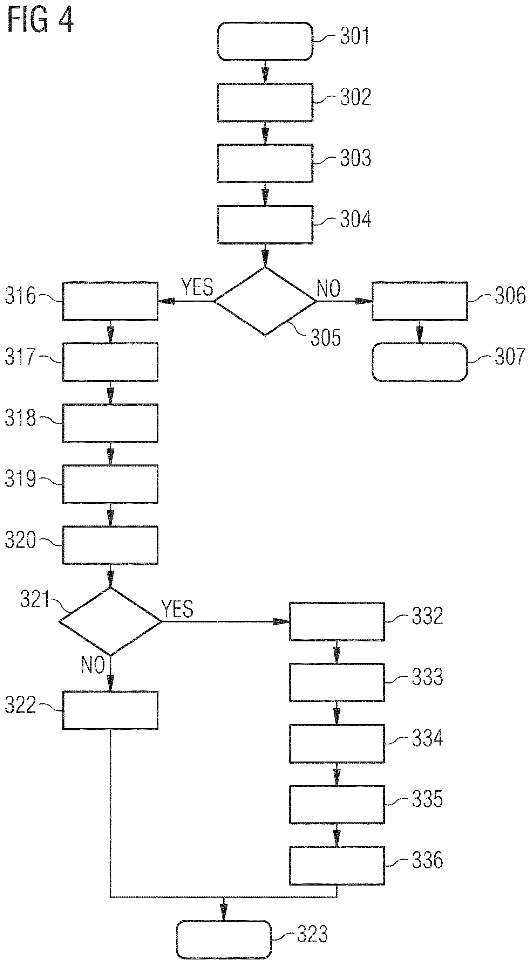

One responsibility of the ZigBee bridge is to provide an interface through which ZigBee messages can be transferred between the IP backbone and ZigBee RF. The exemplary flowchart in FIG 4 shows how ZigBee packets are wrapped with IP and sent over IP interface as well as how an IP wrapped ZigBee message is received from IP interface.

The process starts at step 301. In step 302, the ZigBee bridge ZBR, after powering on, activates its ZigBee and IP interfaces. In step 303, ZigBee bridge ZBR received a ZigBee packet from the ZigBee interface. In step 304, the ZigBee bridge ZBR reads the IEEE 802.15.4 header from the received ZigBee packet.

Subsequently, in step 305, the ZigBee bridge checks the source address comprised in the IEEE 802.15.4 header. Assuming the ZigBee bridge has stored a white list of supported ZigBee devices, it checks if the source address is a valid address according to the list. If this is not the case ("No"), so the ZigBee bridge does not support the ZigBee device from which it has received the packet, it discards the packet in step 306 and the process is stopped in step 307. In addition or alternatively, the ZigBee bridge may also check the destination address comprised in the header to determine if the destination address is a valid address according to the list.

If the source address comprised in the received packet is a valid address according to the white list ("Yes"), the Zigbee bridge generates and transmits an IEEE 802.15.4 MAC level ack (acknowledgement) to the source ZigBee device over the ZigBee interface, step 316. In step 317, the ZigBee bridge wraps the received ZigBee packet with an IP header using the BCC's IP address as the destination address. It then sends the message to its IP interface. In step 318, the ZigBee bridge passes the IP wrapped ZigBee packet to the BPL router via its IP interface. In step 319, the wrapped packet is sent by the router over the broadband power line (BPL) communication backbone network to the building control centre BCC. As the BCC as well as all BPL devices are part of the same local area network (LAN), the wrapped packet reaches the BCC based on the destination IP address of the BCC. In step 320, the BCC removes the IP header from the received wrapped packet and reads the IEEE 802.15.4 header to determine the destination address of the ZigBee device the original packet is intended to be sent to.

In step 321, the BCC checks if the destination ZigBee device's IP address in the white list of all ZigBee bridges.

Additionally, the BCC can also check if the personal area network identifier (PAN IDs) is comprised white list. If the destination ZigBee device cannot be found in any of the lists ("No"), the BCC discards the received packet in step 322 and raises an exception as this packet has already been MAC acknowledged by the receiving ZigBee bridge, step 316. The process then ends with step 323.

Instead, if the BCC finds the IP address of the destination ZigBee device in the white list ("Yes"), it determines in step 332 the IP address of the ZigBee bridge which is in RF range of the destination ZigBee device. The BCC then wraps the received ZigBee packet with an IP header and puts the ZigBee bridge's IP address as the destination IP address. In step 333, the wrapped ZigBee packet is received by IP interface of the addressed destination ZigBee bridge via the BPL backbone network and associated router. In step 334, the destination ZigBee bridge un-wraps the received wrapped ZigBee packet and determines the destination ZigBee device IP address from the IEEE 802.15.4 header comprised in the ZigBee packet. The ZigBee packet is then sent to the destination ZigBee device via the ZigBee bridge's ZigBee interface, step 335. In step 336, the destination ZigBee device generates a MAC level acknowledgement to the destination ZigBee bridge. If the acknowledgement is not received at the destination ZigBee bridge, the ZigBee bridge sends the packet again. Should the MAC acknowledgement not have been received at the ZigBee bridge from the destination ZigBee device after a maximum number of transmissions, it raises an exception and discards the packet. The process then again ends with step 323.

Another responsibility of the ZigBee bridge is to provide MAC level acknowledgements for all authorised ZigBee devices within its RF range. The exemplary flowchart in FIG 5 shows the instances at which the ZigBee bridge issues MAC acknowledgements.

The MAC acknowledgement timeout defined by the IEEE 802.15.4 standard is nearly 864 micro-seconds. In the system proposed in GB 1411267.6 and especially in large MDUs, if MAC acknowledgements were to be issued by the remote destination ZigBee device, the period to transmit such acknowledgement would exceed the defined timeout period probably fairly often. This in turn would increase retransmissions of the ZigBee packets in the IP based backbone communication network. In order to reduce such retransmissions, it is proposed for the ZigBee bridge first receiving a packet from the source ZigBee device to generate the MAC level acknowledgement. For application level acknowledgements, however, the proposed system setup allows sufficient turnaround time for a ZigBee packet to reach its destination ZigBee device and for the source ZigBee device to receive application level acknowledgement from the destination ZigBee device.

The process of FIG 5 starts at step 401. In step 402, after powering on, the ZigBee bridge activates its ZigBee and IP interfaces. In step 403, ZigBee bridge ZBR received a ZigBee packet from the ZigBee interface. In step 404, the ZigBee bridge ZBR reads the IEEE 802.15.4 header from the received ZigBee packet.

Subsequently, the ZigBee bridge ZBR checks the source address comprised in the IEEE 802.15.4 header, step 405. Again assuming the ZigBee bridge has stored a white list of supported ZigBee devices, it checks if the source address is a valid address according to the list. Should this not be the case ("No"), i.e. the ZigBee bridge does not support the ZigBee device from which it has received the packet, it discards the packet in step 406 and the process is stopped in step 407. In addition or alternatively, the ZigBee bridge may also check the destination address comprised in the header to determine if the destination address is a valid address according to the list. Steps 401 to 407 may be realised identical to steps 301 to 307 in FIG 4.

If the source address comprised in the received packet is a valid address according to the white list ("Yes"), the Zigbee bridge generates and transmits an IEEE 802.15.4 MAC level acknowledgement ack to the source ZigBee device over the ZigBee interface, step 416. This MAC level acknowledgement is received by the source ZigBee device in step 417. Subsequently, after having received the MAC acknowledgement, the source ZigBee device waits for a response ZigBee packet issued by the destination ZigBee device, step 418. The source ZigBee device thereby waits until the received packet timeout as defined by the ZigBee protocol stack has occurred.

In step 419, the source ZigBee device checks if the packet response timeout has occurred. If this is not the case ("No"), the process is stopped, step 422. If instead the timeout has occurred ("Yes"), the source ZigBee device checks in step 420 if this has happened for n consecutive times, step 420, wherein n is defined by the ZigBee protocol stack. If the timeout has indeed occurred for n consecutive times ("Yes"), the process is again stopped in step 422. If the timeout has not yet occurred for n consecutive times ("No"), the source ZigBee device retransmits the same ZigBee packet to the ZigBee bridge in step 421, and the process starts again at step 402.

A further responsibility of the ZigBee bridge is to provide a storage mechanism for messages waiting to be sent to a sleepy ZigBee device, i.e. a ZigBee device in a sleep mode and therefore unable to receive new messages, wherein the ZigBee bridge may support sleepy as well as non-sleepy ZigBee devices. Depending on the type of ZigBee device in its RF range, the ZigBee bridge either stores incoming messages for the device and waits for the device to wake up and collect the stored message, or it delivers the messages directly to the device.

A responsibility of the ZigBee bridge is also to support a so called white list. This is a list of identifiers of Personal Area Networks (PAN) PAN ID and addresses of ZigBee devices associated with the specific ZigBee bridge, that is devices for which the ZigBee bridge will forward messages over the IP backbone network and transmit messages to via its ZigBee interface it has received from other ZigBee bridges or ZigBee devices.

An exemplary format of such a white list is shown in FIG 6. This white list keeps the EUID (Extended Unique Identifier) of ZigBee devices along with their PAN IDs for which it should forward messages over the IP backbone network. The identifiers of the ZigBee devices can be those of the source and/or the destination ZigBee device. The white list helps the ZigBee bridge to accept ZigBee messages only for ZigBee devices that need the messages sent over IP, thus avoid flooding of the IP backbone network with ZigBee messages from unknown ZigBee devices, that is messages from ZigBee devices not known to the ZigBee bridge.

During the ZigBee device joining process, that is when a ZigBee device first establishes connection to a ZigBee bridge, the beacons initiated from joining ZigBee device are not filtered by the ZigBee bridge using such a white list. Instead, the ZigBee bridge transfers these beacons to IP backbone. Whenever a known ZigBee device leaves or a known or unknown ZigBee device joins the ZigBee network in a building, it is the responsibility of the building control centre BCC to update the white list of the respective ZigBee bridge associated with this ZigBee device.

The ZigBee bridge may also provide configuration functionality to be accessed remotely by for example an engineer through the network management system NMS, thereby facilitating central configuration and management of ZigBee bridges in a building, for example using a remote graphical interface. For example physical and logical devices within the network may be grouped graphically. The NMS may be connected to the building control centre BCC via a dedicated NMS WAN modem. It may also provide basic information on the status of the building control centre BCC as well as the ZigBee bridge and components of the backbone power line communication network such as routers. The NMS may also alert and inform engineers of any issues with the individual components, thereby enabling basic diagnosis and fault management

The building control centre BCC physically connects to the NMS WAN modem WM as disclosed in FIG 2 and acts as a support system for all ZigBee bridges present in the network. As soon as each ZigBee bridge is connected to the infrastructure network, it receives its IP address, finds the BCC and connects to the BCC's routing server. The white list stored by each ZigBee bridge is provided by the BCC and is maintained as part of the installation and commissioning process.

The BCC usually only operates at the IP level and does not become part of any ZigBee network formed by the ZigBee enabled smart energy or home automation devices. In order for the network management centre NMS to manage the building control centre remotely, the BCC supports SNMPv3 and also exposes a set of APIs (Application Programming Interfaces) to be used by the NMS.

Exemplary responsibilities of the building control centre BCC are as follows. The BCC dynamically builds and updates the white lists for all ZigBee bridges present in the building. The BCC further only sees the MAC packets but does not decipher any of the encrypted ZigBee messages for Network and Application layer.

The BCC also formats and transmits NMS service responses. The BCC is the single point of contact for all required configuration for the ZigBee bridges present in the building.

The NMS initiates all ZigBee bridge configuration requests to BCC. Based on the received request type from the NMS, the BCC then requests and collects the data from the ZigBee bridges present in the building. Furthermore, based on the responses received from ZigBee bridges, the BCC formats response packets and the reply back to the NMS.

The BCC also provides an interface for an external administration of configuration data, for example providing a configuration interface for configuring ZigBee bridges in the building and also for configuring the BCC itself.

The BCC also routes IP wrapped ZigBee messages through the building's IP backbone network, see the above example of FIG 4 describing how ZigBee messages are wrapped over IP and routed in the IP backbone network.

The BCC may also provide a single point of control for the firmware update of all ZigBee bridges present in the building. The BCC should thereby have sufficient storage space to keep firmware images of all ZigBee bridges. The BCC may thereby update a group of ZigBee bridges present in the network or only single ZigBee bridges. It can also schedule such a firmware update process, for example taking into account the current traffic on the IP backbone network.

The BCC may further be responsible for shaping the IP traffic over the building's IP backbone network. This is realised for example by mandating that all IP messages from devices attached to the IP backbone network, i.e. for example routers and gateways according to FIG 4, are being sent to the BCC and from the BCC forwarded to the addressed end device. Furthermore, the BCC may be responsible for prioritising and steering IP messages to the correct network segment to conserve bandwidth.

The BCC should also be capable of creating a backup of its configuration and constant data and storing this backup in for example a remote backup at the NMS server, while it is then also capable of restoring its configuration data from the stored backup data at the NMS server. This feature may be used when the BCC is replaced in the field.

Following the above, the ZigBee bridge is used as a transparent bridge for connecting multiple ZigBee systems or devices via a non ZigBee intermediary data network which previously have not been able to communicate with each other. The ZigBee bridge is thereby termed as transparent to the existing ZigBee personal area network PAN because it does not join any ZigBee network, and the individual ZigBee devices are also not aware of any ZigBee bridge in the network. Typically, a ZigBee bridge just listens and forwards ZigBee packets received from in-range ZigBee devices over IP backbone communication network. As discussed above, the ZigBee bridge is also responsible for providing MAC level acknowledgements to in-range ZigBee devices, to provide a source ZigBee device with an illusion that a sent packet has been successfully received by the destination ZigBee device. Such ZigBee devices can be smart energy devices like in-house displays (IHD), electricity meters, gas meters and communication Hubs. However, any device supporting the ZigBee standard may make use of the provided services. By using ZigBee bridges connected to each other using an intermediary data network, groups of ZigBee devices can form personal area networks even though these devices are not actually in the same RF range. The intermediary data network may for example be realised using known power line communication equipment.

The intermediary data network does also not need to have any knowledge of the contents of the encrypted messages sent by ZigBee devices. The ZigBee bridge forwards packets of in-range ZigBee devices over the intermediary data network but, while doing so, the ZigBee bridge does not decrypt the messages.

According to the invention, multiple ZigBee personal area networks PAN may be connected via a non ZigBee intermediary data network. The intermediary data network thereby requires knowledge of the PAN and ZigBee device mappings but, as mentioned above, does not need to have any knowledge about the contents of the encrypted ZigBee messages. A single ZigBee bridge can support more than one ZigBee device, wherein each ZigBee device can be part of a different PAN. This means that a ZigBee bridge does not work with only one PAN but can support multiple PANs. The intermediary data network only requires knowledge of PAN IDs and ZigBee device IDs for mapping individual devices together. It does, however, not require any knowledge of the contents of encrypted ZigBee messages.

Greater system efficiency can be achieved if the ZigBee device and PAN sub mappings are maintained by a central ZigBee network co-ordinator device. Such co-ordinator, however, would require privileged access to aspects of the ZigBee data payload to be able to effectively map systems.

## Claims

1. System for connecting smart devices in a building, the system comprising
at least two bridging devices, each arranged in relative proximity of at least one of at least two smart devices arranged at different locations within the building, wherein the at least two bridging devices are connected to the smart devices via a wireless connection and to each other via a broadband network, **characterised in that** the bridging devices each use a list of addresses of supported smart devices and associated personal area networks to determine that a packet received from a source smart device is to be transmitted over the broadband network, if the source smart device is supported
by the bridqinq device, and to be discarded, if the source smart device is not supported by the bridqinq device.

2. System according to claim 1, wherein
a list of addresses of smart devices and associated personal area networks is created and maintained by a building control centre of the system.

3. System according to claim 2, wherein
a separate list is created and maintained for every bridging device.

4. System according to any of the preceding claims, wherein
the list comprises addresses of source and/or destination smart devices.

5. System according to any of the preceding claims, wherein
the broadband network is a power line communication network, a fibre optic network, an Ethernet or a Wireless Local Area Network.

6. System according to any of the preceding claims, wherein
the broadband network supports Internet Protocol based communication.

7. System according to any of the preceding claims, wherein
the wireless connections between the at least two bridging devices and the at least two smart devices are realised using protocols defined in the IEEE 802.15.4 communication standard.

8. System according to any of the preceding claims, wherein
the at least two smart devices are smart meters, especially electricity and/or gas meters, and/or in-house displays and/or consumer access devices and/or prepayment meter interface devices.

9. System according to any of the preceding claims, wherein when the received packet is determined to be transmitted over the broadband network, the bridging device having received the packet generates a MAC level acknowledgement to the smart device from which the packet has been received.

10. System according to claim 2, wherein
the packet to be transmitted over the broadband network is wrapped by the bridging device with the address header of the building control centre as destination address.

11. System according to claim 10, wherein
the building control centre, on receipt of the packet, removes the address header, reads the header of the original packet to determine the address of the destination smart device, and determines if the address of the destination smart device is comprised in a list of any of the bridging devices.

12. System according to claim 11, wherein
the building control centre, if the address of the destination smart device is found, determines the address of the bridging device associated with the destination smart device, wraps the original packet with the address header of the bridging device and transmits the wrapped packet over the broadband network to the addressed bridging device.

13. System according to claim 12, wherein
the addressed bridging device, on receipt of the packet, removes the address header and transmits the original packet to the destination smart device.

14. System according to claim 13, wherein
on receipt of the packet, the destination smart device generates a MAC level acknowledgement to the bridging device.

## Patentansprüche

1. System zum Verbinden von intelligenten Geräten in einem Gebäude, wobei das System Folgendes umfasst:
mindestens zwei Überbrückungsvorrichtungen, die jeweils in relativer Nähe zu mindestens einem von mindestens zwei an verschiedenen Stellen in dem Gebäude angeordneten intelligenten Geräten angeordnet sind, wobei die mindestens zwei Überbrückungsvorrichtungen über eine drahtlose Verbindung mit den intelligenten Geräten und über ein Breitbandnetzwerk miteinander verbunden sind, **dadurch gekennzeichnet, dass** die Überbrückungsvorrichtungen jeweils eine Liste von Adressen unterstützter intelligenter Geräte und zugehöriger Personal Area Networks zum Bestimmen benutzen, dass ein von einem intelligenten Quellgerät empfangenes Paket über das Breitbandnetzwerk übertragen werden soll, wenn das intelligente Quellgerät von der Überbrückungsvorrichtung unterstützt wird, und verworfen werden soll, wenn das intelligente Quellgerät nicht von der Überbrückungsvorrichtung unterstützt wird.

2. System nach Anspruch 1, wobei
die Liste von Adressen intelligenter Geräte und zugehöriger Personal Area Networks von einer Gebäudeleitzentrale des Systems erstellt und geführt wird.

3. System nach Anspruch 2, wobei
für jede Überbrückungsvorrichtung eine separate Liste erstellt und geführt wird.

4. System nach einem der vorhergehenden Ansprüche, wobei
die Liste Adressen von intelligenten Quell- und/oder Zielgeräten umfasst.

5. System nach einem der vorhergehenden Ansprüche, wobei es sich bei dem Breitbandnetzwerk um ein Stromleitungskommunikationsnetzwerk, ein faseroptisches Netzwerk, ein Ethernet oder ein drahtloses lokales Netzwerk handelt.

6. System nach einem der vorhergehenden Ansprüche, wobei
das Breitbandnetzwerk eine auf dem Internet-Protokoll basierende Kommunikation unterstützt.

7. System nach einem der vorhergehenden Ansprüche, wobei
die drahtlosen Verbindungen zwischen den mindestens zwei Überbrückungsvorrichtungen und den mindestens zwei intelligenten Geräten unter Verwendung von im Kommunikationsstandard IEEE 802.15.4 definierten Protokollen realisiert sind.

8. System nach einem der vorhergehenden Ansprüche, wobei es sich bei den mindestens zwei intelligenten Geräten um intelligente Zähler, insbesondere Strom- und/oder Gaszähler, und/oder Innenraumanzeigen und/oder Verbraucherzugangsgeräte und/oder Vorauszahlungszähler-Schnittstellengeräte handelt.

9. System nach einem der vorhergehenden Ansprüche, wobei, wenn bestimmt wird, dass das empfangene Paket über das Breitbandnetzwerk übertragen werden soll, die Überbrückungsvorrichtung, die das Paket empfangen hat, für das intelligente Gerät, von dem das Paket empfangen wurde, eine Bestätigung auf der MAC-Ebene erzeugt.

10. System nach Anspruch 2, wobei
das über das Breitbandnetzwerk zu übertragende Paket von der Überbrückungsvorrichtung in den Adresskopf der Gebäudeleitzentrale als Zieladresse eingebunden wird.

11. System nach Anspruch 10, wobei
die Gebäudeleitzentrale bei Empfang des Pakets den Adresskopf entfernt, den Kopf des Originalpakets liest, um die Adresse des intelligenten Zielgeräts zu bestimmen, und bestimmt, ob die Adresse des intelligenten Zielgeräts in einer Liste der Überbrückungsvorrichtungen enthalten ist.

12. System nach Anspruch 11, wobei
die Gebäudeleitzentrale, wenn die Adresse des intelligenten Zielgeräts gefunden wird, die Adresse der zu dem intelligenten Zielgerät gehörenden Überbrückungsvorrichtung bestimmt, das Originalpaket in den Adresskopf der Überbrückungsvorrichtung einbindet und das eingebundene Paket über das Breitbandnetzwerk zu der adressierten Überbrückungsvorrichtung überträgt.

13. System nach Anspruch 12, wobei
die adressierte Überbrückungsvorrichtung bei Empfang des Pakets den Adresskopf entfernt und das Originalpaket zu dem intelligenten Zielgerät überträgt.

14. System nach Anspruch 13, wobei
das intelligente Zielgerät bei Empfang des Pakets für die Überbrückungsvorrichtung eine Bestätigung auf der MAC-Ebene erzeugt.

## Revendications

1. Système de connexion de dispositifs intelligents dans un bâtiment, le système comprenant :
au moins deux dispositifs de pontage, chacun agencé relativement près d'au moins l'un d'au moins deux dispositifs intelligents agencés en des endroits différents à l'intérieur du bâtiment, étant entendu que les au moins deux dispositifs de pontage sont connectés aux dispositifs intelligents au moyen d'une connexion sans fil et l'un à l'autre au moyen d'un réseau à large bande, **caractérisé en ce que** les dispositifs de pontage utilisent chacun une liste d'adresses de dispositifs intelligents pris en charge et de réseaux personnels associés pour déterminer qu'un paquet reçu d'un dispositif intelligent source doit être transmis sur le réseau à large bande si le dispositif intelligent source est pris en charge par le dispositif de pontage, et rejeté si le dispositif intelligent source n'est pas pris en charge par le dispositif de pontage.

2. Système selon la revendication 1, étant entendu :
qu'une liste d'adresses de dispositifs intelligents et de réseaux personnels associés est créée et tenue à jour par un centre de gestion d'immeuble du système.

3. Système selon la revendication 2, étant entendu que :
une liste séparée est créée et tenue à jour pour chaque dispositif de pontage.

4. Système selon l'une quelconque des revendications précédentes, étant entendu que :
la liste comprend des adresses de dispositifs intelligents sources et/ou destinataires.

5. Système selon l'une quelconque des revendications précédentes, étant entendu que :
le réseau à large bande est un réseau de communication sur câbles électriques, un réseau à fibres optiques, un réseau Ethernet ou un réseau local sans fil.

6. Système selon l'une quelconque des revendications précédentes, étant entendu que :
le réseau à large bande prend en charge la communication basée sur le protocole Internet.

7. Système selon l'une quelconque des revendications précédentes, étant entendu que :
les connexions sans fil entre les au moins deux dispositifs de pontage et les au moins deux dispositifs intelligents sont réalisées au moyen de protocoles définis dans la norme 802.15.4 de l'IEEE sur les communications.

8. Système selon l'une quelconque des revendications précédentes, étant entendu que :
les au moins deux dispositifs intelligents sont des compteurs intelligents, en particulier des compteurs d'électricité et/ou à gaz, et/ou des afficheurs intérieurs et/ou des dispositifs d'accès de consommateur et/ou des dispositifs formant interfaces avec des compteurs à budget.

9. Système selon l'une quelconque des revendications précédentes, étant entendu que :
lorsqu'il est déterminé que le paquet reçu doit être transmis sur le réseau à large bande, le dispositif de pontage ayant reçu le paquet produit un accusé de réception de niveau MAC destiné au dispositif intelligent duquel il a reçu le paquet.

10. Système selon la revendication 2, étant entendu que :
le paquet à transmettre sur le réseau à large bande est emballé par le dispositif de pontage avec l'en-tête à adresse du centre de gestion d'immeuble comme adresse de destination.

11. Système selon la revendication 10, étant entendu que :
à la réception du paquet, le centre de gestion d'immeuble enlève l'en-tête à adresse, lit l'en-tête du paquet original pour déterminer l'adresse du dispositif intelligent destinataire et détermine si l'adresse du dispositif intelligent destinataire est comprise dans une liste de l'un quelconque des dispositifs de pontage.

12. Système selon la revendication 11, étant entendu que :
s'il trouve l'adresse du dispositif intelligent destinataire, le centre de gestion d'immeuble détermine l'adresse du dispositif de pontage associé au dispositif intelligent destinataire, emballe le paquet original avec l'en-tête à adresse du dispositif de pontage et transmet le paquet emballé sur le réseau à large bande au dispositif de pontage adressé.

13. Système selon la revendication 12, étant entendu que :
à la réception du paquet, le dispositif de pontage adressé enlève l'en-tête à adresse et transmet le paquet original au dispositif intelligent destinataire.

14. Système selon la revendication 13, étant entendu que :
à la réception du paquet, le dispositif intelligent destinataire produit un accusé de réception de niveau MAC destiné au dispositif de pontage.
